# EUROPEAN PATENT SPECIFICATION

(11) **EP 1 199 849 B1**
(45) Date of publication and mention of the grant of the patent: **14.01.2009**
(21) Application number: 01402512.6
(22) Date of filing: 28.09.2001
(51) Int. Cl.: H04L 12/46, H04L 12/24

(54) **Method and device for declaring and modifying the functionality of a node in a communication network**
Verfahren und Vorrichtung zur Verbuchung und Veränderung der Funktionlalität eines Knotens in einem Kommunikationsnetz
Procédé et dispositif de déclaration et modification de fonctionalité d'un noeud dans un réseau de communication

(30) Priority: 03.10.2000 FR 0012587
(43) Date of publication of application: 24.04.2002
(73) Proprietor: CANON KABUSHIKI KAISHA, Tokyo (JP)
(72) Inventor: Rousseau, Pascal, 35000 Rennes (FR); Braneci, Mohamed, 35000 Rennes (FR); Nezou, Patrice, 35170 Bruz (FR)
(74) Representative: Santarelli

(56) References cited:
- DR DAVID V JAMES: "High Performance Serial Bus Bridges" P1394.1 DRAFT STANDARD FOR HIGH PERFORMANCE SERIAL BUS BRIDGES,IEEE, NEW YORK, NY,,US, [Online] 23 November 1999 (1999-11-23), pages 1-174, XP002159173 Retrieved from the Internet: URL:http://grouper.ieee.org/groups/1394/1/ Documents/br047r09.pdf> [retrieved on 2001-06-22]
- R. PERLMAN: "Interconnections: Bridges and routers" 1992, ADDISON-WESLEY , USA , XP002170416 * page 43 - page 74 *

## Description

The present invention concerns a method and device for declaring and modifying the functionalities of a communication node in a communication network. It also concerns a method of activating or deactivating the characteristics of a communication node.

In any communication network the different elements or communication nodes making up the network must be capable of communicating with each other in accordance with predefined protocols known to all.

When it is wished to make components of two different networks communicating with each other, equipment is inserted which is capable of transmitting the messages from one network to another, referred to as a bridge.

This is also the case when several networks of different natures must exchange information with each other, for example when it is wished to make a network of the cabled type cohabit with a so-called wireless network such as a radio or infrared network. This is also true if two networks of the same type are connected together by a network of a different type. In this situation, two bridges in general provide the interface between the two networks of the same nature.

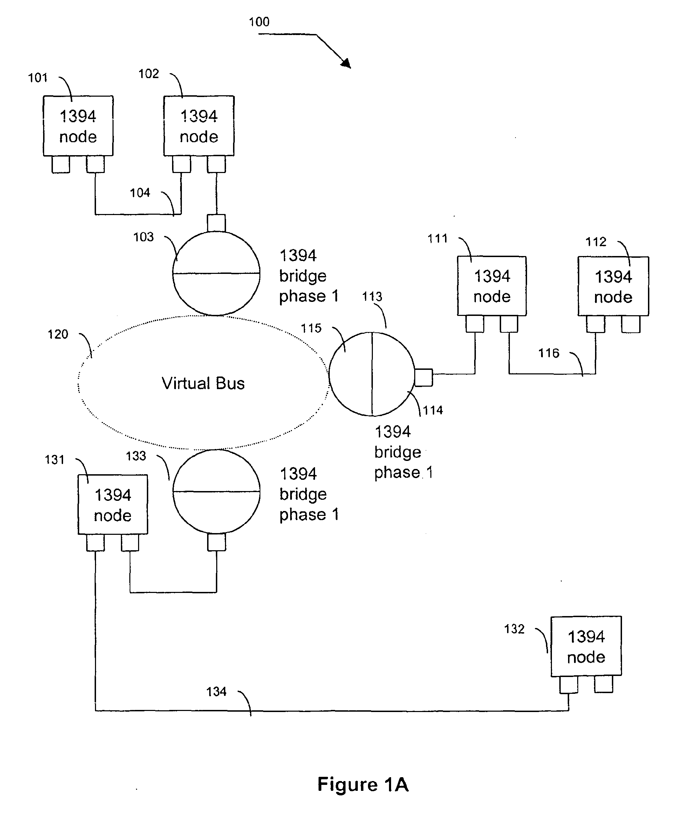

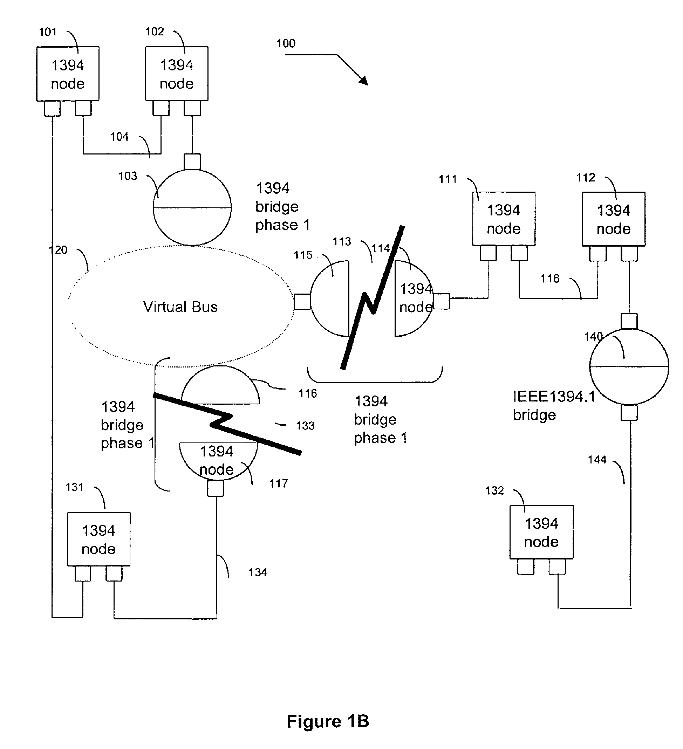

By way of example, Figure 1 describes schematically a network architecture considered by a BRAN HiperLAN2 working party at the ETSI. This restricted architecture comprises a central network of the radio type with bridges affording connection of the IEEE 1394 serial bus type, also referred to as a fire wire.

This network 100 comprises a first sub-network consisting of the nodes 101, 102 and 103, a second sub-network consisting of the nodes 111, 112 and 113, a third sub-network consisting of the nodes 131, 132 and 133, these three sub-networks being in accordance with IEEE1394, and a fourth sub-network consisting of a wireless sub-network 120, and nodes 103, 113 and 133.

It should be noted that the nodes 103, 113 and 133 are connected to both the wireless sub-network and one of the IEEE1394 sub-networks. These nodes are commonly referred to as bridges, a bridge consisting of two portals 114 and 115. These bridges, currently being defined in the HiperLAN 2 draft, claim to be a simplified version of the IEEE1394.1 bridges through the restricted architecture considered.

The nodes 103, 113 and 133 will provide the transit of information between the nodes situated on different sub-networks. For example, if the node 101 communicates with the node 111, the node 103 will take from the bus 104 the information to be transmitted, and will transfer it through the sub-network 120 to the node 113, which will transfer it over the bus 116. The information will then be able to be read by the node 111. It is then quite clear that the nodes 103, 113 and 133 have characteristics or functionalities different from the other nodes of the network.

Figure 1b shows the same network as the one described in Figure 1a, to which a new node 140 has been added. This bridge has functionalities different from the other bridges previously described, and in fact provides the function of bridge between the two buses 116 and 144.

In addition this bridge 140 has functionalities different from the bridges 103, 113 and 133. It is for example capable of managing a complete network architecture as currently being defined by the working party P1394.1 of the IEEE, which is defining an IEEE 1394 serial bus interconnection standard.

It is thus provided that, when a bridge 103, 113 and 133 detects a bridge such as the bridge 140 on the bus to which it is connected, this bridge deactivates its bridge functionality in order to become only a conventional node.

This disconnection, or more precisely invalidation of functionality, is represented in Figure 1b by the break between the portals 114 and 115.

An important characteristic of IEEE1394 networks is that producing loops in a network is prohibited. Figure 1b contains an example of one of these. This is effected with the buses 104, 134, and the sub-network 120.

Thus, if in bridge 103, 113 or 133 detects another bridge of the same type related to the presence of a loop in the network, an election mechanism makes it possible to open the loop, leaving the bridge functionality activated for only one of them.

This disconnection, or more precisely invalidation of functionality, is represented in Figure 1b by the break between the portals 116 and 117.

For reasons of simplification, the bridges having functionalities supporting a limited network architecture will be referred to hereinafter as BRAN bridges and the bridges as defined by the P1394.1 working party of the IEEE will be referred to as 1394 bridges on firewire buses.

In the minutes of the BRAN HiperLAN2 1394 CL meeting which were distributed to the discussion group of this working party under the reference HL 19.5_1394_minutes.doc, an algorithm is described implemented at the level of the BRAN bridges describing a method of detecting bridges of the BRAN or 1394 type.

This method is implemented each time a new node is connected to the bus where a BRAN bridge is present. This is because, according to IEEE1394, at each new connection or disconnection, at the request of the IEEE1394 physical layer or when there is an excessively long wait in certain transient states, re-initialization of the bus is effected. This re-initialization is commonly referred to as "Bus Reset".

In networks of the bus type, when a node sends information over the bus, this information is visible to all the nodes connected to the same network.

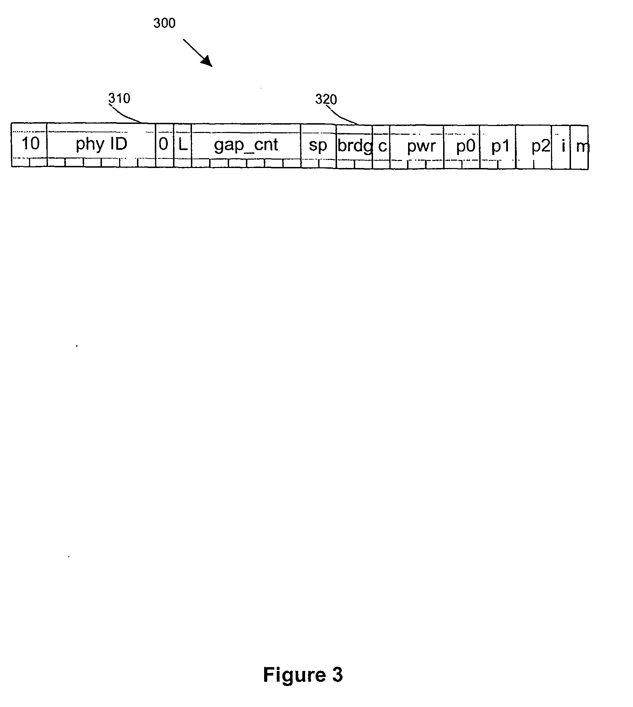

During a "BUS RESET", all the nodes connected to the bus will generate an identification message comprising amongst other things information representing their functionalities and information representing their address. This identification message will be described below with reference to Figure 3.

In this identification message a field is reserved for defining the 1394 bridge functionality.

On the other hand, no field has been provided for defining other bridges, for example the BRAN bridges.

Following a "BUS RESET", a BRAN bridge will read, in each initialization message present on the bus, the field reserved for the definition of a 1394 bridge in order to detect whether there is a bridge of this type on the bus.

In the affirmative, the "BRAN" bridge functionality will not be activated.

In the negative, the "BRAN" bridge will read, by means of the bus, a predetermined register in the memory of each node connected to the bus, if one of the nodes implements the "BRAN" bridge functionality.

If none of the other nodes has in memory information representing a "BRAN" bridge functionality, the "BRAN" bridge will then activate its bridge functionality between two different networks.

If there are at least two nodes having the bridge functionality of the "BRAN" type on the same bus, only one can activate this functionality.

Arbitrarily, the node having the largest physical address "physical ID" will activate the "BRAN" bridge functionality, the others not.

This method has many disadvantages. The first and most important is that reading a predetermined register in the memory of each node takes a long time since it is sequential.

In addition, many messages will pass over the bus in order to be able to implement this method.

In the document "High Performance Serial Bus Bridges" P1394.1 Draft Standard for high performance serial bus bridges, IEEE, New York, NY, US 23 November 1999, pages 1-175, Dr David James discloses a method of declaring devices over a network after a bus reset.

In the document "Interconnections: Bridges and routers" 1992, Addison-Wesley, USA, XP002170416, R. Perlaman discloses how bridges are constituted and operate.

However, neither of these documents discloses, teaches or suggests a solution to the afore-mentioned problems.

The present invention aims to remedy the problems mentioned above by proposing a method of declaring a functionality over a network interconnecting a plurality of nodes, said method comprising the following steps implemented by a first node:
- receiving, from a second node, a message representing if a bridge functionality is active or not at said second node, said message being transmitted by the second node following a bus reset on the network; and
- judging whether or not said message represents that a bridge functionality is active at the second node;
   the method being **characterized in that,** if the bridge functionality is not active at the second node, it comprises the following steps implemented by the first node:

- activating a bridge functionality at the first node,
- generating an additional bus reset on the network; and
- following the generation of the bus reset by the first node, sending over the network a message representing that the bridge functionality is active at the first node.

Thus the declaration of functionality is effected simply and rapidly. This technique makes it possible to simultaneously inform all the nodes present on the network, more particularly the bus, of the bridge functionality.

According to a preferred embodiment of the invention, the steps of generating the predetermined event and of sending the set of data are preceded by a step of generating a time delay with a random value.

This solution is simple to implement and makes it possible to select a bridge in a non-arbitrary manner where several bridges are present on the bus.

The invention also concerns a method of declaring a modification of the functionality of a node in a network comprising at least two nodes, each node connected to the network sending over the network, following the occurrence of a predetermined event on the network, a set E of data representing its functionalities, **characterized in that** the method includes the following step:
if amongst the sets E of data sent over the network at least a second set E includes at least one data item representing a predetermined functionality, sending over the network the set E of data representing the deactivation of the functionality when a predetermined event occurs.

Thus the invention remains compatible with the different standards applied to such networks.

The invention also concerns a method of modifying the functionality of a node in a network comprising at least two nodes, each node connected to the network sending over the network, following the occurrence of a predetermined event on the network, a set E of data representing its functionalities, **characterized in that** the method includes the following steps:
- on the occurrence of a predetermined event, sending over the network the set E of data representing the deactivation of the functionality, and deactivating the functionality.

By virtue of this, at any time, two bridges will be able to be situated together on the same bus. The deactivation on the functionality being effected before any detection of a new bridge.

Correlatively, the invention proposes a device for declaring a functionality over a network interconnecting a plurality of nodes, the first node being adapted to:
- receive, from a second node, a message representing if a bridge functionality is active or not at said second node, said message being transmitted by the second node following a first bus reset on the network; and
- judge, whether or not said message represents that a bridge functionality is active at the second node;
   the device being **characterized in that** the first node is also adapted, if the bridge functionality is not active at the second node, to:

- activate a bridge functionality at the first node,
- generate an additional bus reset on the network; and
- following the generation of the additional bus reset, send over the network a message representing that the bridge functionality is active at the first node.

According to a particular mode, the device also includes time delay means with a random value.

The invention also relates to a program containing one or more sequences of instructions able to implement the declaration method and the method of modifying at least one functionality of a node according to the invention when the program is loaded and executed in a device comprising a central unit.

The invention also concerns an information carrier, such as a diskette or compact disc (CD), **characterized in that** it contains such a program.

The advantages of these devices, these programs and this information carrier are identical to those of the method as succinctly disclosed above.

Other particularities and advantages of the invention will also emerge from the following description.

In the accompanying drawings, given by way of non-limitative example embodiments:
- Figures 1a and 1b are diagrams illustrating the general architecture of a network,
- Figure 2 is a block diagram representing the device implementing the invention,
- Figure 3 is a description of an identification message used according to the invention,
- Figure 4 is a first algorithm implementing the invention,
- Figure 5 is a second algorithm implementing a first variant of the invention,
- Figure 6 is a third algorithm implementing a second variant of the invention,
- Figure 7 is a fourth algorithm implementing a third variant of the invention,
- Figure 8 is a fifth algorithm implementing a fourth variant of the invention,
- Figure 9 is a description in the form of a state diagram of the invention,
- Figure 10 is a variant of the state diagram of Figure 9.

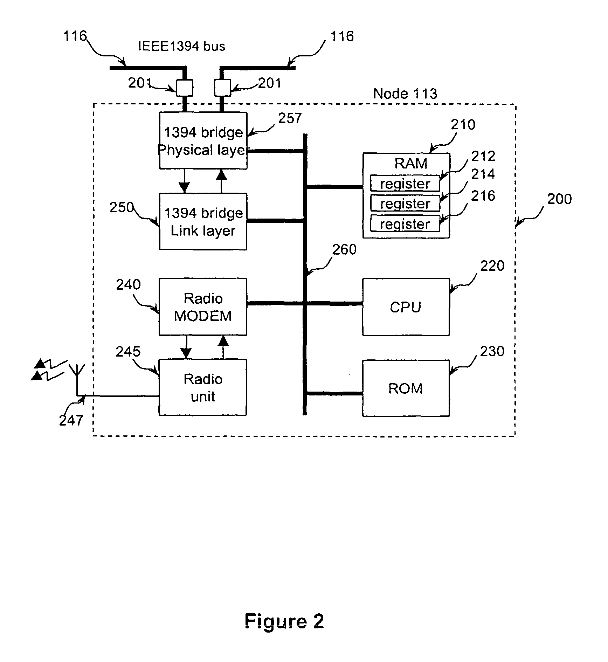

Figure 2 depicts a node according to the invention. This node, for example the node 113 in Figures 1 a and 1b, is a radio transmitter connected to the serial communication bus 116 by connectors 201.

The node has a 1394 physical interface circuit denoted 257 and a circuit fulfilling the functions of the 1394 physical layer denoted 250.

The node 113 also has a calculation unit 220, a temporary storage means of the RAM type denoted 210 containing several registers denoted 212, 214 and 216 and a permanent storage means denoted 230.

As depicted in Figure 2, the node 113 has a radio modem 240 connected to a radio unit 245 equipped with a radio antenna 247.

A local bus denoted 260 connects the different elements in the node 113 together.

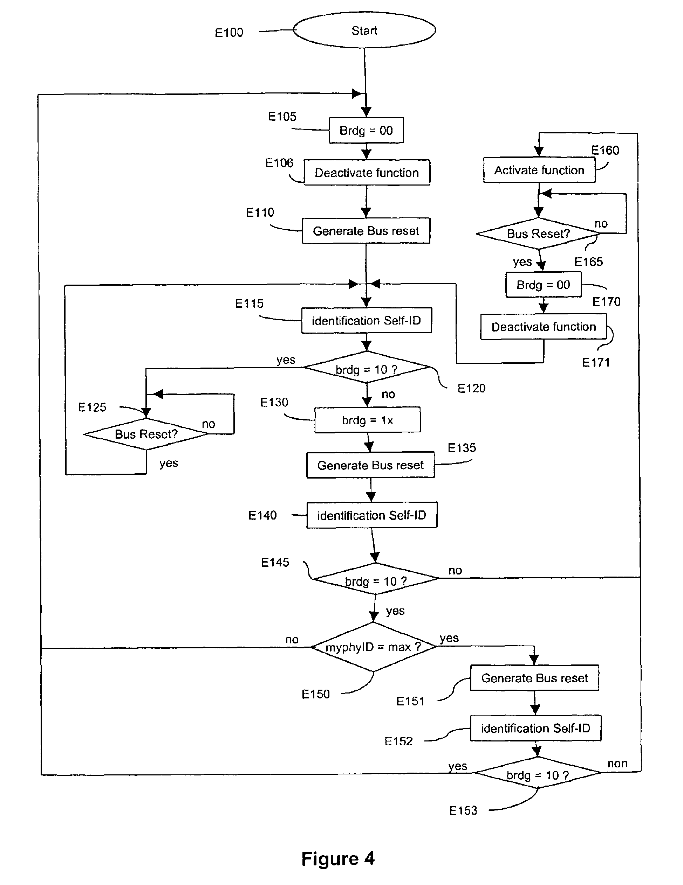

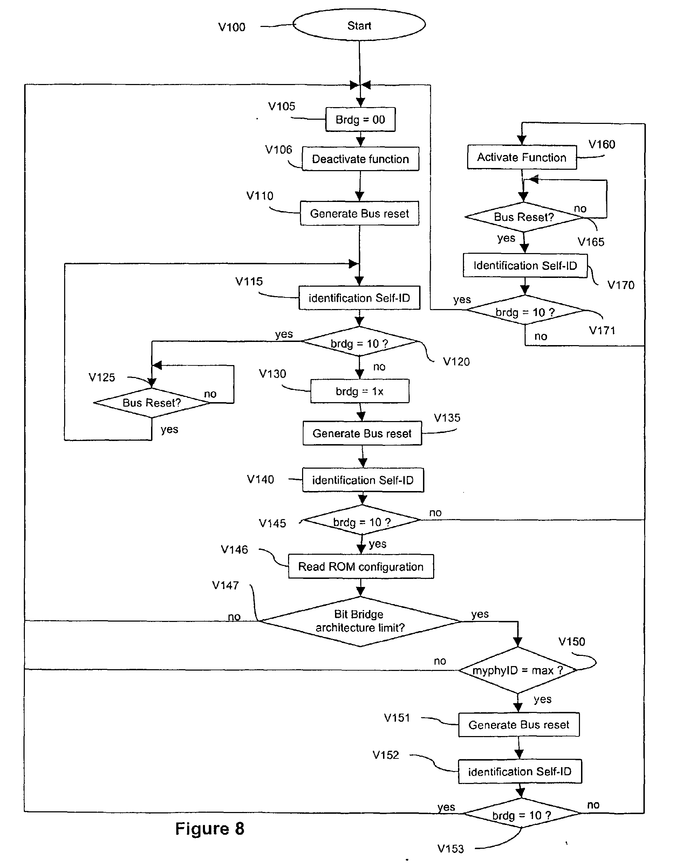

The non-volatile memory ROM contains the programs necessary for implementing the invention according to Figures 4, 5, 7, 8, 9 and 10 as well as the programs implementing the protocols in accordance with IEEE 1394, and the protocols in accordance with the "BRAN" standard. The ROM memory also contains the intrinsic characteristics of each portal such as the configuration parameters used subsequently with reference to Figure 8.

A description will now be given with reference to Figure 3 of the set E of identification data or identification message generated by all the nodes connected to the same IEEE 1394 communication bus.

This "Self-ID" initialization message 300 consists of 14 fields. Only the fields 310 and 320 are used for implementing the invention. The other fields are defined in the working document "P1394.1 draft 0.10".

The field 310 of the initialization message includes the physical address of the node sending this message. This physical address is defined for each node when the bus is configured.

The field 320, referred to as brdg, is the field representing the bridge functionality or not in the node. This field is composed of two bits. A binary value "00" represents a conventional communication node, a priori supplying no bridge functionality.

As will be seen subsequently and according to the invention, this binary value will be used by the bridges of the "BRAN" type when the bus is first initialized or when there is another bridge on the bus.

The binary value "01" is reserved, that is to say it has no meaning at the present time and will serve for example for future developments of IEEE 1394.

The binary values "10" and "11" for their part are reserved for bridges of the "1394" type.

As will be seen subsequently, these binary values will be used by the bridges of the "BRAN" type when no "1394" bridge exists on the bus, these binary values then indicating to the other nodes in the network that a bridge is connected to the bus, a bridge whose functionalities will be activated.

With reference to Figure 4, a description will be given of the first embodiment of the invention. When the device 200 is powered up, the central unit will read in the ROM 230 the code associated with the algorithm of the flow diagram and will load it into the RAM memory 210. The step E100 of the flow diagram corresponds to the detection made by the physical layer 257 of the connection to an IEEE 1394 bus. The physical layer 257 transmits the information to the central unit 220 by means of the internal bus 260.

On reception of information about connection to the bus, the central unit will, at step E105, put, in the random access memory 216, the two bits brdg, representing the bridge functionality or not at 00. Next it deactivates its functionalities associated with the bridge at step E106.

Once this operation has been performed, the central unit will send an instruction to regenerate a bus Reset to the physical layer of the 1394 bus denoted 257, which will perform the operation.

Secondly, and automatically, the central unit will cause the generation of a "Self-ID" identification packet by means of the connecting layer 250 and the physical layer 257.

The content of the brdg field of the "Self-ID" identification packet will be read in the register 216 of the memory 210

Once this operation has been performed, the central unit will, at step E115, identify all the Self-ID identification packets generated by the nodes connected to the bus and will store the content of their respective brdg fields.

The following step E120 will consist for the central unit of verifying whether one of the brdg fields stored is equal to the binary values "10".

In the affirmative, this means that there is a so-called "1394" bridge on the bus. The node can therefore not activate its bridge function. The central unit therefore passes to step E125, which is a loop awaiting a Bus Reset, that is to say a bus connection modification. Where a Block Reset is detected by the physical layer 257, the central unit passes to step E115 and recommences the previously described process.

If at step E120 none of the brdg fields stored is equal to the binary values "10", the central unit passes to step E130, which consists of modifying in the register 216 the value of the two bits representing the bridge functionality.

Whilst this operation is being performed, at step E135, a Bus Reset will be effected as well as the generation of an initialization packet, in the same way as step E110.

At step E140, the central unit will in the same way as at step E115 store the brdg fields of the "Self-ID" identification packets present on the network and will also store the content of the fields 310 of the respective identification packets in the register 212.

The following step E145 will consist, for the central unit, of the same operation as the step E120.

Where the test 145 is positive, this means that at least one other bridge is present on the bus.

It will therefore be necessary to choose one of the nodes which will take the bridge functionality. This is done by comparing the values of the fields "phylD" corresponding to the initialization packets whose brdg field is equal to "10" with the "phylD" of the node.

This is done at step E150.

Where the test E150 is negative, the central unit will reset the content of the brdg register to "00" by returning to the previously described step E105.

If the test E150 is positive, at step E151, a Bus Reset will be effected as well as the generation of an initialization packet, in the same way as at step E110.

At step E152, the central unit will in the same way as at step E115 store the brdg fields of the "Self-ID" identification packets present on the network and will also store the content of the fields 310 of the respective identification packets in the register 212.

The following step E153 will consist for the central unit of the same operation as step E120.

Where the test E153 is positive, the central unit will reset the content of the brdg register to "00" by returning to the previously described step E105.

If the test E153 is negative or likewise if the test E145 is negative, the central unit passes to the step E160 and activates the "BRAN" bridge function. The other nodes in the network will then be able to cause information to pass through this bridge to other nodes in the network.

This will remain effective as long as the physical layer does not detect a Bus Reset on the bus. A bus reset representing a possible modification of the topology of the bus and perhaps the introduction of a new bridge. This waiting is effected at step E165.

Where a Bus Reset has been detected at step E165, the central unit will, at step E171, deactivate the bridge functionality and modify the value of the field brdg in the random access memory 210 at step E170. This modification will then be inserted in the "Self-ID" identification packet following on from the reception of the bus reset at step E165. The central unit will then return to the previously described step E115.

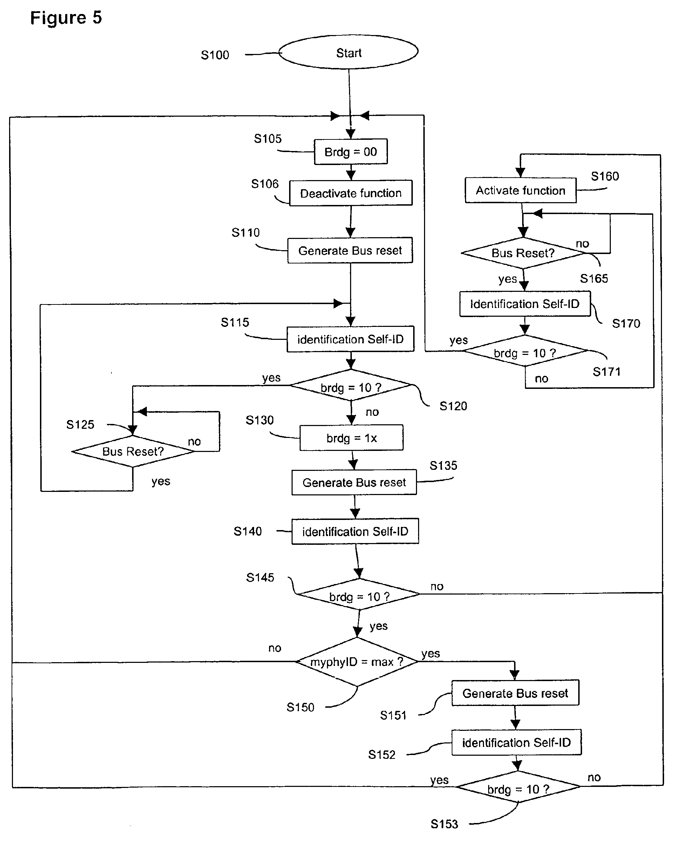

With reference to Figure 5, a description will now be given of a second embodiment of the invention.

The algorithm includes steps denoted S100 to S171.

Steps 100 to S165 are identical to the previousiy described steps E100 to E165 and will therefore not be described.

Unlike the previous algorithm, the central unit will not immediately deactivate its bridge function on detecting a "Bus Reset" at step S165, the identification packet "Self-ID" generated by means of the connection layer 250 and physical layer 257 will then comprise a brdg field equal to "10".

At step S170, the central unit will identify all the "Self-ID" identification packets generated by the nodes connected to the bus and will store the content of their respective brdg fields.

The following step E171 will consist, for the central unit, of checking whether one of the brdg fields stored is equal to the binary values "10".

In the affirmative, this means that there is a so-called "1394" bridge on the bus. The node must therefore deactivate its bridge function and return its brdg field to "00" by going to step S105.

If at step S171 none of the brdg fields stored is equal to the binary values "10", the bridge functionality is kept and the central unit passes to the previously described step S165.

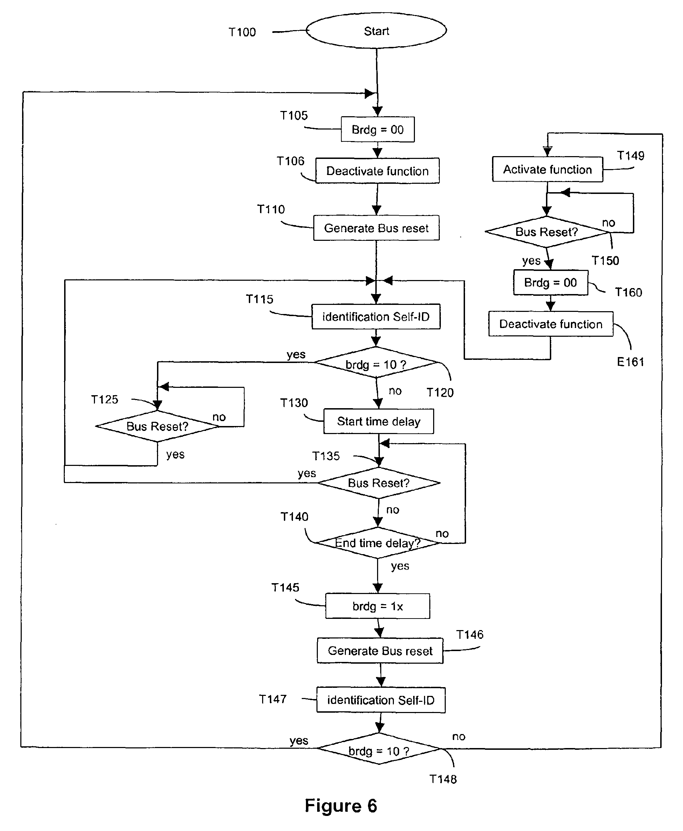

With reference to Figure 6, a description will be given of a third embodiment of the invention.

Steps T100 to T125 are identical to steps E100 to E125 and will therefore not be described.

This variant does not use a technique of selection from amongst the bridges detected according to the value of the field phylD, but according to a random technique. Each "BRAN" bridge will randomly take a time delay value. A value which is nevertheless limited.

At step T130, the central unit will therefore randomly draw a time delay value, will load a computer with this time delay value and will commence counting down.

It should be noted that, for predetermined reasons, this time delay can be set to zero, which then makes it possible to force the choice of the node which will activate the bridge functionality. This setting to zero can be justified by particular requirements, for example peculiar to the functioning of a node.

If during the counting down Bus Reset is detected, this means that another bridge has been faster, and the node will therefore abandon its attempt to become a bridge and the central unit will therefore switch to step T115.

If on the other hand no Bus Reset has arisen between the triggering of the counting down and its end (step T140), the central unit will at step T145 put "10" in the brdg register, and generate a Bus Reset at step T146. Steps T145 and T148 are identical respectively to steps T145 and T120.

Where test T148 is positive, the central unit will reset the content of the brdg register to "00", returning to the previously described step T105.

Steps T149 to T161 are identical to steps E160 to E171 in Figure 4, and will therefore not be described.

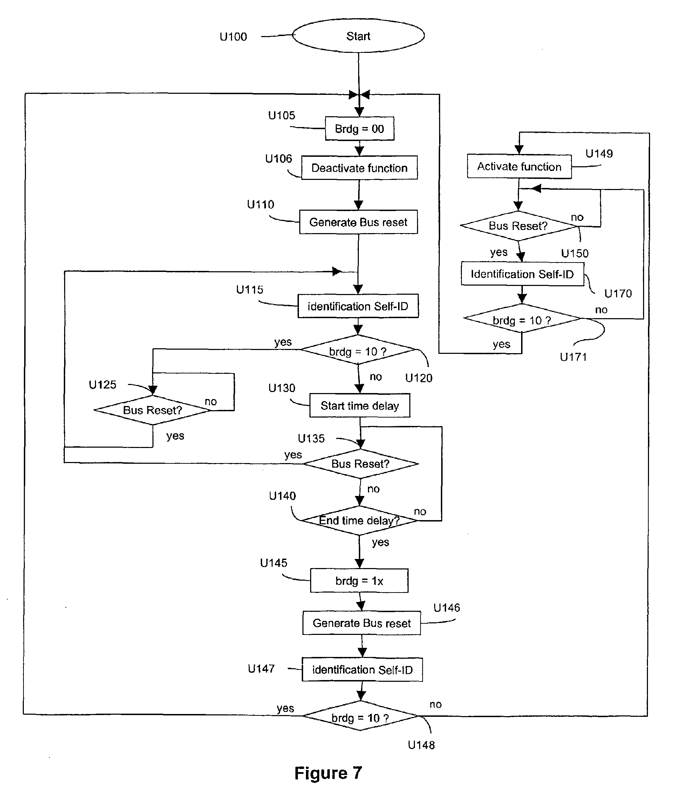

With reference to Figure 7, a description will be given of a fourth embodiment of the invention.

The algorithm includes steps denoted U100 to U171.

Steps U100 to U149 are identical to steps T100 to T149 in the previous Figure 6 and will therefore not be described.

Unlike the previous algorithm, the central unit will not immediately deactivate its bridge function on detecting a "Bus Reset" at step U150, the "Self-ID" identification packet generated by means of the connection layer 250 and physical layer 257 will then comprise a brdg field equal to "10".

At step U160, the central unit will identify all the "Self-ID" identification packets generated by the nodes connected to the bus and will store the content of their respective brdg fields.

The following step U170 will consist, for the central unit, of checking whether one of the brdg fields stored is equal to the binary values "10".

In the affirmative, this means that there is a so-called "1394" bridge on the bus. The node must therefore deactivate its bridge function and reset its bridge fields to "00", going to step U105.

If at step U171 none of the brdg fields stored is equal to the binary values "10", the bridge functionality is kept and the central unit passes to the previously described step U150.

With reference to Figure 8, a description will be given of a fifth embodiment of the invention.

This figure includes the same steps as those of Figure 5. Steps V100 to V171 correspond to steps S100 to S171. Two new steps V146 and V147 have been added between steps V145 and V150.

Step V146 will read a configuration parameter situated in the ROM memory of the bridges which the central unit has detected during step E145, that is to say those whose brdg field is equal to "10". This parameter characterizes the fact that a bridge has limited architecture (for example of the BRAN type, or a so-called "1394" bridge.

This parameter is based at a known predetermined point in all the items of equipment.

Thus, at step V147, if the test is positive, the algorithm goes to step V150. This means that several bridges of the BRAN type have been detected. If the test is negative, the central unit will reset the content of the brdg register to "00", returning to the previously described step E105. This means that at least one of the bridges detected is a so-called "1394" bridge on the bus. The node can therefore not activate its bridge function.

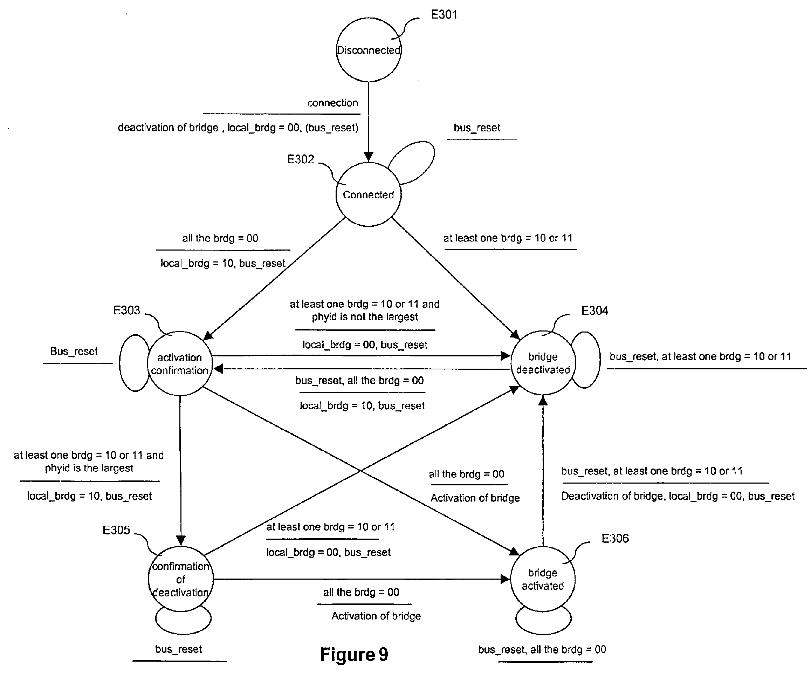

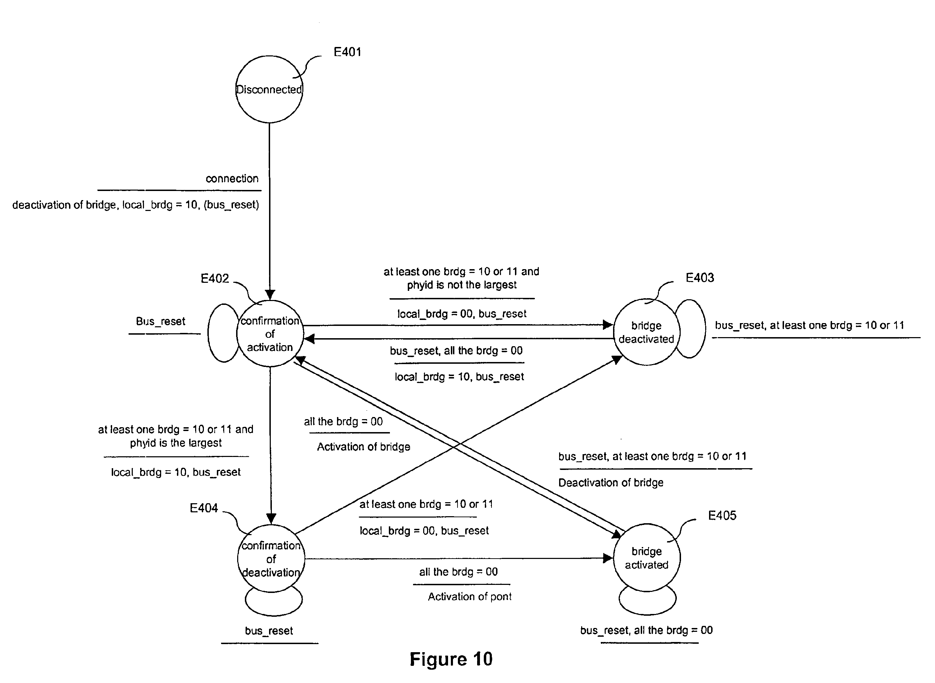

This invention will now be described in the form of a state diagram with reference to Figures 9 and 10.

With reference to Figure 9, the first variant will be described. When the device 200 is powered up, the central unit will read in the ROM 230 the code associated with the algorithm of the state machine and load it into the RAM 210. The device goes from the disconnected state E301 to the connected state E302 as soon as the connection to an IEEE 1394 bus is detected by the physical layer 257. The transition between these two states is accompanied by actions of deactivation of the bridge function and the initialization of the variable brdg to "00". When the device is connected the physical layer 257 automatically generates a "Bus Reset".

In the connected state E302, the device connects all the "Self-ID" identification packets transmitted in the bus by the other devices, and examines their brdg field. If a bus reset occurs in state E302, the device remains in the same state and recommences the connection of the "Self-ID" identification packets.

When the brdg field of all the identification packets sent in the bus is equal to "00", the device initializes its brdg to "10", generates a bus reset, and goes into an activation confirmation state E303. If on the other hand at least one brdg field is equal to "10" or "11 ", the device goes into a deactivated bridge state E304.

In state E303, the device also connects "Self-ID" identification packets and analyses their brdg field. If at least one brdg field is equal to "10" or "11", and the physical address "Phyid" of the device is not the largest of the physical addresses "Phyid" (field 310 of the packet 300 in Figure 3) and all the other devices having their brdg field equal to "10" or "11 ", then the device initializes its local_brdg to "00", generates a bus reset, and goes into a deactivated bridge state E304. If on the other hand the physical address "Phyid" of the device is the largest of the physical addresses "Phyid" of all the other devices having their field equal to "10" or "11", then the device initializes its local_brdg to "10", generates a bus reset and goes into a deactivation confirmation state E305. Where the brdg field of all the "Self-ID" identification packets sent over the bus is equal to "00", the device activates its bridge function, and goes into a bridge activated state E306.

When the device is in a deactivation confirmation state E305, and detects at least one brdg field equal to "10" or "11", then it initializes its local_brdg to "00", generates a bus reset and goes into a bridge deactivated state E304. If on the other hand all the brdg fields are equal to "00", then it activates the bridge function and goes into a bridge activated state E306.

If a bus Reset occurs in states E303 or E305, the device remains in the same states and recommences the collection of the identification packets (set E of predetermined data) "Self-ID".

When the device is in a bridge deactivated state E304, it remains in this state as soon as it detects at least one brdg field equal to "10" or "11" after a bus Reset. Where the brdg field of all the "Self-ID" identification packets sent in the bus is equal to "00", the device initializes local_brdg to "10", generates a bus Reset and goes into an activation confirmation state E303.

When the device is in a bridge activated state E306, it remains in this state as long as it detects that the brdg field of all the Self-ID packets sent in the bus is equal to "00" after a bus Reset. Where the device detects at least one brdg field equal to "10" or "11" after a bus Reset, it deactivates the bridge function, initializes local_brdg to "00", generates a bus Reset and goes into bridge deactivated state E304.

Figure 10 depicts a variant of the state diagram of Figure 9. This variant is similar in several points to the same variant, and consequently only the main differences will be described.

In this second variant, when the device is connected, local_brdg is initialized to "10". The device therefore passes directly into the state of confirmation of activation of the bridge function (E402). When the device is in the bridge activated state E405 and detects at least one brdg field equal to "10" or "11" after a bus Reset, the bridge function is deactivated, and the device goes into an activation confirmation state E402.

Naturally numerous modifications or combinations between different variants can be made to the embodiment of the invention described above without departing from the scope of the invention.

## Claims

1. A method of declaring a bridge functionality over a network (120) interconnecting a plurality of nodes (103, 113, 133), said method comprising the following steps implemented by a first node:
- receiving (E115, S115, T115, U115, V115), from a second node, a message (300, 320) representing if a bridge functionality is active or not at said second node, said message being transmitted by the second node following a bus reset (E110, S110, T110, U110, V110) on the network; and
- judging (E120, S120, T120, U120, V120) whether or not said message represents that a bridge functionality is active at the second node;
the method being **characterized in that**, if the bridge functionality is not active at the second node, it comprises the following steps implemented by the first node:
- activating a bridge functionality at the first node,
- generating (E135, S135, T146, U146, V135) an additional bus reset on the network; and
- following the generation of the bus reset by the first node, sending (E140, S140, T147, U147, V140) over the network a message (300) representing that the bridge functionality is active at the first node.

2. The method of claim 1, further comprising, following the step (E135, S135, T146, U146, V135) of generating the additional bus reset, a step of receiving from the second node, at the first node, an additional message representing if said bridge functionality is active or not at said second node.

3. The method of claim 2, further comprising an additional step of judging whether or not the received additional message represents that said bridge functionality is active at the second node.

4. The method of any one of claims 1 to 3, further comprising a step of activating or deactivating said bridge functionality according to the result of at least one step of judging.

5. A method according to claim 4, wherein if, according to the result of each one of said judgement, the messages represent that said bridge functionality is not active at said second node, said bridge functionality is activated (E160) at said first node, otherwise said bridge functionality is not activated or is deactivated at said first node.

6. A method according to any one of claims 1 to 5, wherein the message representing that the bridge functionality is active includes identification data identifying the first node.

7. A method according to claim 6, wherein, following the additional bus reset, the first node stores the identification data received from each other node.

8. A method according to any one of claims 1 to 7, wherein the message representing that the bridge functionality is active at the first node is sent over the network after a predetermined time delay following the additional bus reset.

9. A method according to any one of claims 1 to 8, wherein the message representing that the bridge functionality is active represents that the bridge functionality is to be activated, or not.

10. A device for declaring a functionality over a network (120) interconnecting a plurality of nodes (103, 113, 133), the first node being adapted to:
- receive (E115, S115, T115, U115, V115), from a second node, a message (300, 320) representing if a bridge functionality is active or not at said second node, said message being transmitted by the second node following a first bus reset (E110, S110, T110, U110, V110) on the network; and
- judge (E120, S120, T120, U120, V120), whether or not said message represents that a bridge functionality is active at the second node;
the device being **characterized in that** the first node is also adapted, if the bridge functionality is not active at the second node, to:
- activate a bridge functionality at the first node,
- generate (E135, S135, T146, U146, V135) an additional bus reset on the network; and
- following the generation of the additional bus reset, send (E140, S140, T147, U147, V140) over the network a message (300) representing that the bridge functionality is active at the first node.

11. The device of claim 10, wherein the first node is adapted, following the generation of the additional bus reset, to receive from the second node an additional message representing if said bridge functionality is active or not at said second node.

12. The device of claim 11, wherein the first node is adapted to additionally judge whether or not the received additional message represents that said bridge functionality is active at the second node.

13. The device of any one of claims 10 to 12, wherein the first node is adapted to activate of deactivate said bridge functionality according to the result of at least one judgement.

14. A device according to claim 13, wherein the first node is adapted, if, according to the result of each one of said judgement, the messages represent that said bridge functionality is not active at said second node, to activate said bridge functionality, otherwise said bridge functionality is not activated or is deactivated at said first node.

15. A device according to any one of claims 10 to 14, wherein the message representing that the bridge functionality is active at the first node includes identification data identifying the first node.

16. A device according to claim 15, wherein the first node is adapted, following the additional bus reset, to store the identification data received from each other node.

17. A device according to any one of claims 10 to 16, the first node is adapted to send the message representing that the bridge functionality is active at the first node over the network after a predetermined time delay following the additional bus reset.

18. A device according to any one of claims 10 to 17, wherein the message (320) representing that the bridge functionality is active at the first node represents that the bridge functionality is to be activated, or not.

## Patentansprüche

1. Verfahren eines Angebens einer Brückenfunktionalität über ein Netzwerk (120), das eine Vielzahl von Knoten (103, 113, 133) miteinander verbindet, wobei das Verfahren die folgenden durch einen ersten Knoten implementierten Schritte aufweist:
Empfangen (E115, S115, T115, U115, V115) einer Nachricht (300, 320) von einem zweiten Knoten, die darstellt, ob an dem zweiten Knoten eine Brückenfunktionalität aktiv ist oder nicht, wobei die Nachricht von dem zweiten Knoten einem Bus-Reset (E110, S110, T110, U110, V110) bezüglich des Netzwerks folgend übertragen wird; und
Beurteilen (E120, S120, T120, U120, V120), ob die Nachricht darstellt oder nicht, dass eine Brückenfunktionalität an dem zweiten Knoten aktiv ist;
**dadurch gekennzeichnet, dass**, falls die Brückenfunktionalität an dem zweiten Knoten nicht aktiv ist, das Verfahren die folgenden durch den ersten Knoten implementierten Schritte aufweist:
Aktivieren einer Brückenfunktionalität an dem ersten Knoten,
Erzeugen (E135, S135, T146, U146, V135) eines zusätzlichen Bus-Resets bezüglich des Netzwerks; und
Senden (E140, S140, T147, U147, V140), der Erzeugung des Bus-Resets durch den ersten Knoten folgend, einer Nachricht (300), die darstellt, dass die Brückenfunktionalität an dem ersten Knoten aktiv ist, über das Netwerk.

2. Verfahren gemäß Anspruch 1, zudem mit, dem Schritt (E135, S135, T146, U146, V135) eines Erzeugens des zusätzlichen Bus-Resets folgend, einem Schritt eines Empfangens an dem ersten Knoten einer zusätzlichen Nachricht von dem zweiten Knoten, die darstellt, ob die Brückenfunktionalität an dem zweiten Knoten aktiv ist oder nicht.

3. Verfahren gemäß Anspruch 2, zudem mit einem zusätzlichen Schritt eines Beurteilens, ob die empfangene zusätzliche Nachricht darstellt oder nicht, dass die Brückenfunktionalität an dem zweiten Knoten aktiv ist.

4. Verfahren gemäß einem der Ansprüche 1 bis 3, zudem mit einem Schritt eines Aktivierens oder Deaktivierens der Brückenfunktionalität gemäß dem Ergebnis von zumindest einem Schritt eines Beurteilens.

5. Verfahren gemäß Anspruch 4, wobei die Brückenfunktionalität an dem ersten Knoten aktiviert wird (E160), falls, gemäß dem Ergebnis von jeder Beurteilung, die Nachrichten darstellen, dass die Brückenfunktionalität an dem zweiten Knoten nicht aktiv ist, und wobei andernfalls die Brückenfunktionalität an dem ersten Knoten nicht aktiviert wird oder deaktiviert wird.

6. Verfahren gemäß einem der Ansprüche 1 bis 5, wobei die Nachricht, die darstellt, dass die Brückenfunktionalität aktiv ist, den ersten Knoten identifizierende Identifikationsdaten umfasst.

7. Verfahren gemäß Anspruch 6, wobei, dem zusätzlichen Bus-Reset folgend, der erste Knoten die von jedem anderen Knoten empfangenen Identifikationsdaten speichert.

8. Verfahren gemäß einem der Ansprüche 1 bis 7, wobei die Nachricht, die darstellt, dass die Brückenfunktionalität an dem ersten Knoten aktiv ist, über das Netzwerk nach einer vorbestimmten Zeitverzögerung, dem zusätzlichen Bus-Reset folgend, gesendet wird.

9. Verfahren gemäß einem der Ansprüche 1 bis 8, wobei die Nachricht, die darstellt, dass die Brückenfunktionalität aktiv ist, darstellt, dass die Brückenfunktionalität zu aktivieren ist, oder nicht.

10. Vorrichtung zum Angeben einer Funktionalität über ein Netzwerk (120), das eine Vielzahl von Knoten (103, 113, 133) miteinander verbindet, wobei der erste Knoten zu Folgendem angepasst ist:
Empfangen (E115, S115, T115, U115, V115) einer Nachricht (300, 320) von einem zweiten Knoten, die darstellt, ob an dem zweiten Knoten eine Brückenfunktionalität aktiv ist oder nicht, wobei die Nachricht von dem zweiten Knoten einem ersten Bus-Reset (E110, S110, T110, U110, V110) bezüglich des Netzwerks folgend übertragen wird; und
Beurteilen (E120, S120, T120, U120, V120), ob die Nachricht darstellt oder nicht, dass eine Brückenfunktionalität an dem zweiten Knoten aktiv ist;
**dadurch gekennzeichnet, dass**, falls die Brückenfunktionalität an dem zweiten Knoten nicht aktiv ist, der erste Knoten auch zu Folgendem angepasst ist:
Aktivieren einer Brückenfunktionalität an dem ersten Knoten,
Erzeugen (E135, S135, T146, U146, V135) eines zusätzlichen Bus-Resets bezüglich des Netzwerks; und
Senden (E140, S140, T147, U147, V140), der Erzeugung des zusätzlichen Bus-Resets folgend, einer Nachricht (300), die darstellt, dass die Brückenfunktionalität an dem ersten Knoten aktiv ist, über das Netwerk.

11. Vorrichtung gemäß Anspruch 10, wobei der erste Knoten, der Erzeugung des zusätzlichen Bus-Resets folgend, zum Empfangen einer zusätzlichen Nachricht von dem zweiten Knoten, die darstellt, ob die Brückenfunktionalität an dem zweiten Knoten aktiv ist oder nicht, angepasst ist.

12. Vorrichtung gemäß Anspruch 11, wobei der erste Knoten zum zusätzlichen Beurteilen, ob die empfangene zusätzliche Nachricht darstellt oder nicht, dass die Brückenfunktionalität an dem zweiten Knoten aktiv ist, angepasst ist.

13. Vorrichtung gemäß einem der Ansprüche 10 bis 12, wobei der erste Knoten zum Aktivieren oder Deaktivieren der Brückenfunktionalität gemäß dem Ergebnis von zumindest einer Beurteilung angepasst ist.

14. Vorrichtung gemäß Anspruch 13, wobei der erste Knoten zum Aktivieren der Brückenfunktionalität angepasst ist, falls die Nachrichten gemäß dem Ergebnis von jeder Beurteilung darstellen, dass die Brückenfunktionalität an dem zweiten Knoten nicht aktiv ist, und wobei andernfalls die Brückenfunktionalität an dem ersten Knoten nicht aktiviert wird oder deaktiviert wird.

15. Vorrichtung gemäß einem der Ansprüche 10 bis 14, wobei die Nachricht, die darstellt, dass die Brückenfunktionalität an dem ersten Knoten aktiv ist, den ersten Knoten identifizierende Identifikationsdaten umfasst.

16. Vorrichtung gemäß Anspruch 15, wobei der erste Knoten, dem zusätzlichen Bus-Reset folgend, zum Speichern der von jedem anderen Knoten empfangenen Identifikationsdaten angepasst ist.

17. Vorrichtung gemäß einem der Ansprüche 10 bis 16, wobei der erste Knoten zum Senden der Nachricht, die darstellt, dass die Brückenfunktionalität an dem ersten Knoten aktiv ist, über das Netzwerk nach einer vorbestimmten Zeitverzögerung, dem zusätzlichen Bus-Reset folgend, angepasst ist.

18. Vorrichtung gemäß einem der Ansprüche 10 bis 17, wobei die Nachricht (320), die darstellt, dass die Brückenfunktionalität an dem ersten Knoten aktiv ist, darstellt, dass die Brückenfunktionalität zu aktivieren ist, oder nicht.

## Revendications

1. Procédé de déclaration d'une fonctionnalité de pont sur un réseau (120) interconnectant de multiples noeuds (103, 113, 133), ledit procédé comprenant les étapes suivantes exécutées par un premier noeud :
- la réception (E115, S115, T115, U115, V115), depuis un deuxième noeud, d'un message (300, 320) indiquant si une fonctionnalité de pont est active ou non audit deuxième noeud, ledit message étant émis par le deuxième noeud à la suite d'une remise à l'état initial de bus (E110, S110, T110, U110, V110) sur le réseau ; et
- estimer (E120, S120, T120, U120, V120) si ledit message indique ou non qu'une fonctionnalité de pont est active au deuxième noeud ;
le procédé étant **caractérisé en ce que**, si la fonctionnalité de pont n'est pas active au deuxième noeud, il comprend les étapes suivantes exécutées par le premier noeud :
- l'activation d'une fonctionnalité de pont au premier noeud,
- la génération (E135, S135, T146, U146, V135) d'une remise à l'état initial de bus supplémentaire sur le réseau ; et
- à la suite de génération de la remise à l'état initial de bus par le premier noeud, l'envoi (E140, S140, T147, U147, V140) sur le réseau d'un message (300) indiquant que la fonctionnalité de pont est active au premier noeud.

2. Procédé selon la revendication 1, comprenant en outre, à la suite de l'étape (E135, S135, T146, U146, V135) de génération de la remise à l'état initial de bus supplémentaire, une étape de réception depuis le deuxième noeud, au premier noeud, d'un message supplémentaire indiquant si ladite fonctionnalité de bus est active ou non audit deuxième noeud.

3. Procédé selon la revendication 2, comprenant en outre une étape supplémentaire consistant à estimer si le message supplémentaire reçu indique ou non que ladite fonctionnalité de pont est active au deuxième noeud.

4. Procédé selon l'une quelconque des revendications 1 à 3, comprenant en outre une étape d'activation ou de désactivation de ladite fonctionnalité de pont en fonction du résultat d'au moins une étape d'estimation.

5. Procédé selon la revendication 4, dans lequel si, en fonction du résultat de chacune desdites estimations, les messages indiquent que ladite fonctionnalité de pont n'est pas active audit deuxième noeud, ladite fonctionnalité de pont est activée (E160) audit premier noeud, autrement ladite fonctionnalité de pont n'est pas activée ou est désactivée audit premier noeud.

6. Procédé selon l'une quelconque des revendications 1 à 5, dans lequel le message indiquant que la fonctionnalité de pont est active comprend des données d'identification identifiant le premier noeud.

7. Procédé selon la revendication 6, dans lequel, à la suite de la remise à l'état initial de bus supplémentaire, le premier noeud stocke les données d'identification reçues de chaque autre noeud.

8. Procédé selon l'une quelconque des revendications 1 à 7, dans lequel le message indiquant que la fonctionnalité de pont est active au premier noeud est envoyé sur le réseau après un temps de retard prédéterminé suivant la remise à l'état initial de bus supplémentaire.

9. Procédé selon l'une quelconque des revendications 1 à 8, dans lequel le message indiquant que la fonctionnalité de pont est active indique que la fonctionnalité de pont doit être activée, ou non.

10. Dispositif pour déclarer une fonctionnalité sur un réseau (120) interconnectant de multiples noeuds (103, 113, 133), le premier noeud étant conçu pour :
- recevoir (E115, S115, T115, U115, V115), depuis un deuxième noeud, un message (300, 320) indiquant si une fonctionnalité de pont est active ou non audit deuxième noeud, ledit message étant émis par ledit deuxième noeud à la suite d'une première remise à l'état initial de bus (E110, S110, T110, U110, V110) sur le réseau ; et
- estimer (E120, S120, T120, U120, V120) si ledit message indique ou non qu'une fonctionnalité de pont est active au deuxième noeud ;
le dispositif étant **caractérisé en ce que** le premier noeud est également conçu, si la fonctionnalité de pont n'est pas active au deuxième noeud, pour :
- activer une fonctionnalité de pont au premier noeud,
- générer (E135, S135, T146, U146, V135) une remise à l'état initial de bus supplémentaire sur le réseau ; et
- à la suite de la génération de la remise à l'état initial de bus supplémentaire, envoyer (E140, S140, T147, U147, V140) sur le réseau un message (300) indiquant que la fonctionnalité de pont est active au premier noeud.

11. Dispositif selon la revendication 10, dans lequel le premier noeud est conçu, à la suite de la génération de la remise à l'état initial de bus supplémentaire, pour recevoir du deuxième noeud un message supplémentaire indiquant si ladite fonctionnalité de pont est active ou non audit deuxième noeud.

12. Dispositif selon la revendication 11, dans lequel le premier noeud est conçu pour estimer de façon supplémentaire si le message supplémentaire reçu indique ou non que ladite fonctionnalité de pont est active au deuxième noeud.

13. Dispositif selon l'une quelconque des revendications 10 à 12, dans lequel le premier noeud est conçu pour activer ou désactiver ladite fonctionnalité de pont en fonction du résultat d'au moins une estimation.

14. Dispositif selon la revendication 13, dans lequel le premier noeud est conçu si, en fonction du résultat de chacune desdites estimations, les messages indiquent que ladite fonctionnalité de pont n'est pas active audit deuxième noeud, pour activer ladite fonctionnalité de pont, autrement ladite fonctionnalité de pont n'est pas activée ou est désactivée audit premier noeud.

15. Dispositif selon l'une quelconque des revendications 10 à 14, dans lequel le message indiquant que la fonctionnalité de pont est active au premier noeud comprend les données d'identification identifiant le premier noeud.

16. Dispositif selon la revendication 15, dans lequel le premier noeud est conçu, à la suite de la remise à l'état initial de bus supplémentaire, pour stocker les données d'identification reçues de chaque autre noeud.

17. Dispositif selon l'une quelconque des revendications 10 à 16, dans lequel le premier noeud est conçu pour envoyer le message indiquant que la fonctionnalité de pont est active au premier noeud sur le réseau après un temps de retard prédéterminé à la suite de la remise à l'état initial de bus supplémentaire.

18. Dispositif selon l'une quelconque des revendications 10 à 17, dans lequel le message (320) indiquant que la fonctionnalité de pont est active au premier noeud indique que la fonctionnalité de pont doit être activée, ou non.
